(19) Europäisches Patentamt / European Patent Office / Office européen des brevets

(11) **EP 4 486 008 A1**

(12) **EUROPEAN PATENT APPLICATION**

(43) Date of publication:
**01.01.2025 Bulletin 2025/01**

(21) Application number: **23207155.5**

(22) Date of filing: **31.10.2023**

(51) International Patent Classification (IPC):
*H04W 36/18* (2009.01)    *H04W 36/00* (2009.01)

(52) Cooperative Patent Classification (CPC):
**H04W 36/185;** H04W 36/0079

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.06.2023 IN 202341042754**

(71) Applicant: **Samsung Electronics Co., Ltd.**
**Suwon-si, Gyeonggi-do 16677 (KR)**

(72) Inventors:
• **BETTAPPANAVAR, Arunakumar**
**560048 Bengaluru (IN)**
• **PADHI, Aditya Kumar**
**560048 Bengaluru (IN)**
• **ISAKKI, Isakkiraja**
**560048 Bengaluru (IN)**
• **GOEL, Meha**
**560048 Bengaluru (IN)**
• **GOVIL, Shalini**
**560048 Bengaluru (IN)**
• **MADHURANTAKAM, Shrinath Ramamoorthy**
**560048 Bengaluru (IN)**

(74) Representative: **Marks & Clerk LLP**
**15 Fetter Lane**
**London EC4A 1BW (GB)**

Remarks:
Amended claims in accordance with Rule 137(2) EPC.

(54) **METHOD AND SYSTEM FOR MANAGING SOURCE CELL CONNECTION DURING A DUAL ACTIVE PROTOCOL STACK (DAPS) HANDOVER**

(57) A method and system for managing source cell connection during a Dual Active Protocol Stack (DAPS) handover with respect to a UE. The method includes establishing, while maintaining DAPS data bearers with a source cell, DAPS data bearers with a target cell during DAPS handover in response to receiving a DAPS handover message from the source cell. The method monitors a plurality of channel condition parameters of the target cell upon successful establishment of the DAPS data bearers with the target cell. Thereafter, the method determines whether a value of each of the monitored plurality of channel condition parameters is more than a respective predefined threshold value, if so, the DAPS data bearers with the source cell are managed.

FIG. 8

800

ESTABLISHING, WHILE MAINTAINING DAPS DATA BEARERS WITH A SOURCE CELL, DAPS DATA BEARERS WITH A TARGET CELL DURING DAPS HANDOVER BASED ON A RECEPTION OF A DAPS HANDOVER MESSAGE FROM THE SOURCE CELL — 801

MONITORING A PLURALITY OF CHANNEL CONDITION PARAMETERS OF THE TARGET CELL UPON SUCCESSFUL ESTABLISHMENT OF THE DAPS DATA BEARERS WITH THE TARGET CELL — 803

DETERMINING WHETHER A VALUE OF EACH OF THE MONITORED PLURALITY OF CHANNEL CONDITION PARAMETERS EXCEEDS A RESPECTIVE PREDEFINED THRESHOLD VALUE — 805

MANAGING THE DAPS DATA BEARERS WITH THE SOURCE CELL BASED ON A RESULT OF THE DETERMINATION THAT THE VALUE OF EACH OF THE MONITORED PLURALITY OF CHANNEL CONDITION PARAMETERS EXCEEDS THE RESPECTIVE PREDEFINED THRESHOLD VALUE — 807

EP 4 486 008 A1

Description

## TECHNICAL FIELD

The present disclosure relates generally to wireless communications and more particularly to a method and a system for managing source cell connection during a dual active protocol stack (DAPS) handover. In particular, the present disclosure relates to a method and a system for deciding the release or retention of the source cell connection during DAPS handover (HO).

## DISCUSSION OF RELATED ART

Wireless communication systems have become an integral part of modern life, providing a wide range of services to users all over the world. Some wireless communication systems use different Radio Access Technologies (RATs), which allows various services/features to be provided. In recent years, with the introduction of a new Radio Access Technology known as New Radio (NR), the possibilities for wireless communication have expanded even further. Among other things, NR has been designed to cater to three main use cases, each with its unique requirements and characteristics. These use cases include Enhanced Mobile Broadband (eMBB), Ultra Reliable Low Latency Communications (URLLC) (which involves applications requiring real-time communications), and Massive Machine Type Communications (mMTC).

3rd Generation Partnership Project (3GPP) Release-16 has introduced a Dual Active Protocol Stack (DAPS) Handover (HO) to address latency issues in URLLC. The 3GPP Release-16 (hereafter, "the specification") has provided various solutions that offer a "make before break" HO concept, rather than the "break before make" HO offered in previous releases. This ensures that the new connection is established before the old connection is dropped, ensuring that there is no interruption in the communication. Therefore, the latency is reduced to almost zero milliseconds through use of the "make before break" HO concept.

As per the DAPS HO, a User Equipment (UE) performs simultaneous reception/transmission in both the source cell (the cell currently connected) and the target cell. Further, the LTE stops reception/transmission in the source cell only after an explicit indication to release from the target cell. Hence, although the introduction of the DAPS HO in 3GPP Release-16 has improved the performance of the URLLC, there are still some issues with the existing DAPS HO procedures. One such issue is the delay or missed indication to release the source cell connection from the target cell. This delay may occur due to various reasons as mentioned below:

- DAPS HO is completed, and the DAPS release message is delayed;

- DAPS HO is completed, and the DAPS release message is missed due to poor channel condition/LTE issue;

- DAPS HO is completed, but the DAPS release message is not sent from the network (NW);

- DAPS HO is completed, and the DAPS release message is missed due to the unavailability of dual sim dual standby (DSDS) radio frequency (RF) grant in a Multi-Sim LTE; or

- DAPS HO is completed, and Radio Link Failure (RLF) is detected at target cell before DAPS release message is received.

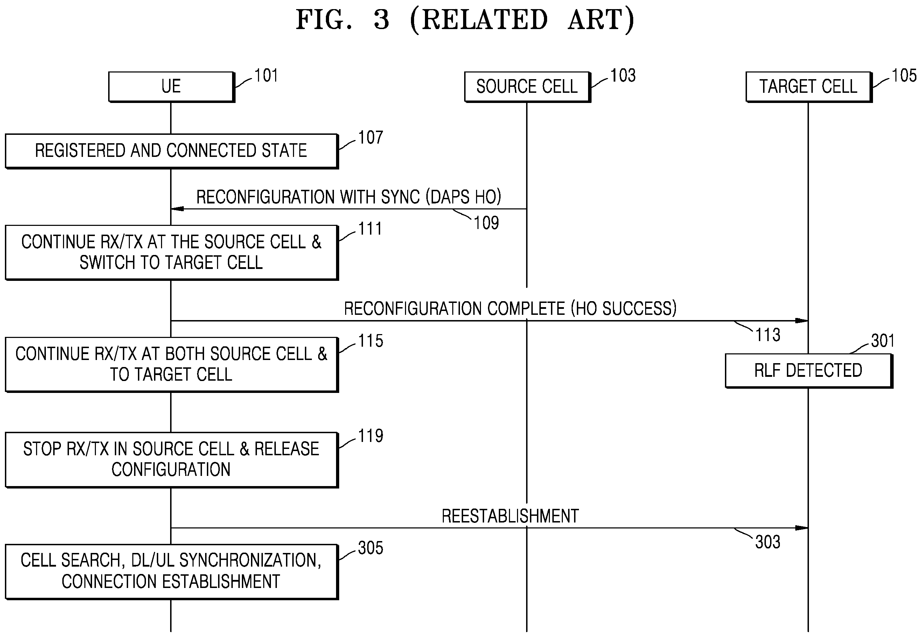

Now, if the DAPS release message is delayed or missed, during the DAPS HO, the delay or missed DAPS release message results in a power consumption issue, mobility issues, etc. Generally, during the DAPS HO, if an RLF is detected at the target cell before the DAPS release message is received; as per the specification, the reestablishment procedure will be triggered in the target cell. Further, the source cell configuration will be released, but is still active. In particular, the source cell is still required to be active and performing the reception/transmission even after establishing connection with a target cell. Thus, there will be a delay in data resumption since the LTE needs to perform a cell search, a mandatory system information block (SIB) read, a random access channel (RACH) scheduling / access, and a connection establishment. The aforesaid issue is depicted in FIG. 3 (step 305).

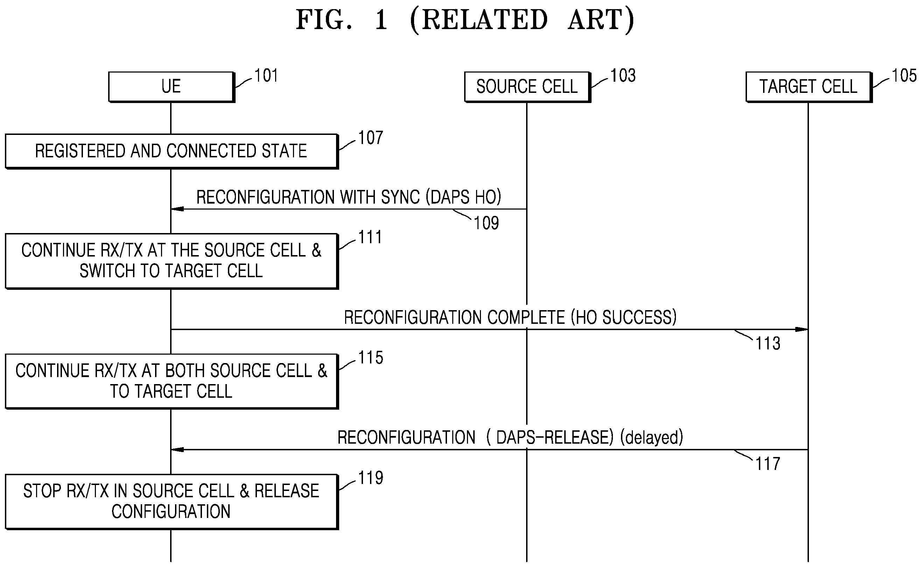

FIG. 1 illustrates a DAPS HO procedure in a case where the DAPS release message is delayed or missed, according to a conventional methodology. As can be seen in FIG. 1, at step 107, a UE 101 is in a registered and connected (e.g. configured) state. During DAPS HO at step 109, a source cell 103 provides a reconfiguration message in connection with DAPS HO to the LTE 101. Then at step 111, the LTE 101 continues to perform reception (RX) and/or transmission (TX) at the source cell 103 and prepares to switch to the target cell 105. Now after successful HO, the UE 101 sends a reconfiguration complete message (HO success) at step 113. However, as can be seen from step 115, the LTE 101 is still active and continues to perform RX and/or TX at both the source cell 103 and the target cell 105 as the DAPS release message at step 117 is delayed in this case. Accordingly, only after the explicit reception of the DAPS release message, the UE 101, at step 119, stops performing RX and/or TX in the source cell 103 and releases the configuration.

As explained above, there may arise various reasons for the missed or delayed indication to release the source cell connection from the target cell. Referring to FIG. 1, the scenario herein considered, is a case where the DAPS HO is completed, and the DAPS release message is delayed. Thus, despite the DAPS HO completion at step 113, there is no clarity about the timing of sending the DAPS release in the specification. Thus, if target cell 105 delays sending the DAPS release for a long time, then the UE's power consumption increases since it is still performing the radio link monitoring and RX/TX operations on both source and target cells.

According to another scenario, consider a case where the DAPS HO is completed, and the DAPS release message is missed due to a poor channel condition / UE issue. Returning to FIG. 1, an issue related to the power consumption may occur since the LTE 101 continues to monitor the source cell 103 and reception/transmission is still occurring in the source cell 103. Also, there may be mobility issues if the network sends a handover message during this condition and configurations like dual connectivity (DC) and carrier aggregation (CA) from the network may be ignored.

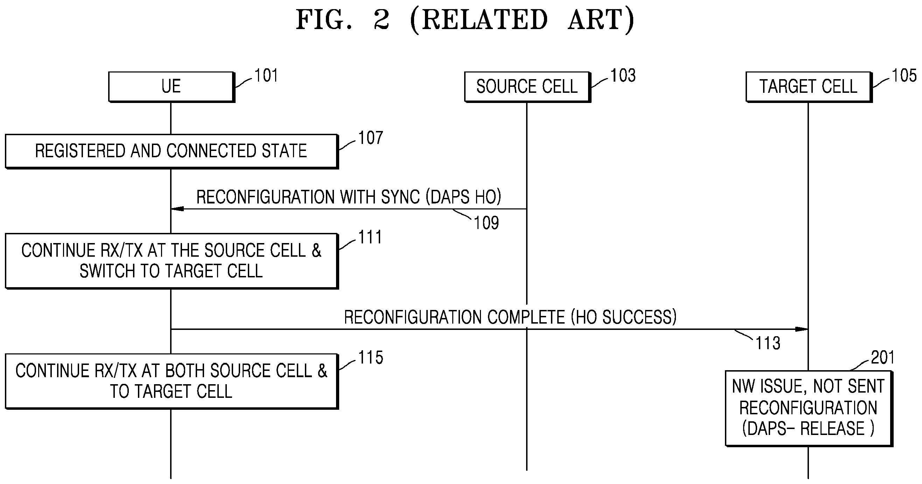

FIG. 2 illustrates a scenario of the missed or delayed DAPS release message in a case where the DAPS release message is not received by the UE 101 from the network. As can be seen from the step 201 of FIG. 2, due to the network issue, the DAPS release message is not received by the LTE 101 from the network. Due to this, there may occur a power consumption issue since the LTE 101 continues to monitor the source cell 103 and the RX/TX is still occurring in the source cell 103. Further, there may arise mobility issues since handover is not expected when the DAPS bearer is configured. Furthermore, the UE 101 may ignore some other configurations from the network which are not expected when the DAPS bearer is configured.

According to some scenarios, as explained above, the DAPS HO is completed, and the DAPS release message is missed due to the DSDS RF grant unavailability in the Multi-SIM UE. In such a case there may arise the power consumption issue since the LTE continues to monitor the source cell also and RX/TX is still occurring in the source cell. Also, there may be mobility issues in a case where the network sends a handover message and configurations like DC and CA from the network may be ignored.

FIG. 3 illustrates a scenario of the missed or delayed DAPS release message in a case where the RLF is detected at the target cell before the DAPS release message is received by the UE. As can be seen in FIG. 3, the RLF is detected at step 301, before the DAPS release message is received by the UE 101. As per the 3GPP specification, the reestablishment procedure will be triggered at step 303 in the target cell 105, and the source cell 103 configuration, which is still active, will be released while RX/TX is occurring in that cell. Thus, there will be a delay in the data resumption since the UE 101 needs to perform a cell search, mandatory SIB read, RACH access, and connection establishment as shown in the step 305.

Thus, a need exists for a methodology to overcome the above-discussed problems.

## SUMMARY

In an aspect, the present subject matter relates to a method and a system for managing source cell connection during a Dual Active Protocol Stack (DAPS) handover with respect to a UE. The method includes establishing, while maintaining DAPS data bearers with a source cell, DAPS data bearers with a target cell during DAPS handover in response to a reception of a DAPS handover message from the source cell. A plurality of channels condition parameters of the target cell are monitored upon successful establishment of the DAPS data bearers with the target cell. Thereafter, the method determines whether a value of each of the monitored plurality of channel condition parameters is more than a respective predefined threshold value, if so, the DAPS data bearers with the source cell are managed (e.g., released if channel conditions are satisfactory based on the monitored channel condition parameters).

In another aspect, an apparatus includes at least one processor configured to perform the above-summarized method.

In still another aspect, a method performed by a UE for managing a source cell connection during a DAPS handover with respect to the UE involves: establishing, while maintaining a DAPS data bearer associated with a source cell, a DAPS data bearer with a target cell during a DAPS handover in response to receiving a DAPS handover message from the source cell; monitoring channel conditions with respect to the target cell following the establishment of the DAPS data bearer with the target cell; and determining whether the channel conditions together satisfy at least one predefined criterion, if so, releasing the DAPS data bearer associated with the source cell, if not, retaining the DAPS data bearer associated with the source cell. The at least one predefined criterion may be a plurality of criteria, each associated with one channel condition parameter.

At least some of the above and other features of the invention are set out in the claims.

## BRIEF DESCRIPTION OF THE DRAWINGS

These and other features, aspects, and advantages of the present inventive concept will become better understood when the following detailed description is read with reference to the accompanying drawings in which like characters represent like parts throughout the drawings, wherein:

FIG. 1 illustrates a DAPS HO procedure in case the DAPS release message is delayed, according to a conventional methodology.

FIG. 2 illustrates a scenario of the missed DAPS release message in a case where the DAPS release message is not sent from the network, according to related art.

FIG. 3 illustrates a scenario of the missed or delayed DAPS release message in a case where the RLF is detected at the target cell before the DAPS release message is received by the UE, according to related art.

FIG. 4 illustrates a flow chart depicting operations for managing a DAPS bearer in a case where the DAPS release message is missed or delayed at the LTE, according to an embodiment of the present disclosure.

FIG. 5 illustrates a flow chart depicting operations for managing the DAPS bearer after an expiry of a time duration (T), according to an embodiment of the present disclosure.

FIG. 6 illustrates a flow chart depicting operations for managing the DAPS bearer for Multi-SIM UE, according to an embodiment of the present disclosure.

FIG. 7 illustrates a flow chart depicting operations for managing a DAPS bearer in a case where an RLF is detected in the target cell, according to an embodiment of the present disclosure.

FIG. 8 illustrates a flow chart depicting operations for managing source cell connection during a dual Active Protocol Stack (DAPS) handover, according to an embodiment of the present disclosure.

FIG. 9 illustrates an example diagram of a network, according to an embodiment of the present disclosure.

FIG. 10 is a diagram illustrating the configuration of a user equipment (UE) in a wireless communication system, according to an embodiment of the present disclosure.

Further, skilled artisans will appreciate that elements in the drawings are illustrated for simplicity and may not have been necessarily drawn to scale. For example, the flow charts illustrate the method in terms of the most prominent steps involved to help to improve understanding of aspects of the present inventive concept. Furthermore, in terms of the construction of the device, one or more components of the device may have been represented in the drawings by conventional symbols, and the drawings may show only those specific details that are pertinent to understanding the embodiments of the present inventive concept so as not to obscure the drawings with details that will be readily apparent to those of ordinary skill in the art having the benefit of the description herein.

## DETAILED DESCRIPTION

It should be understood at the outset that although illustrative implementations of the embodiments of the present disclosure are illustrated below, the present inventive concept may be implemented using any number of techniques, whether currently known or in existence. The present disclosure should in no way be limited to the illustrative implementations, drawings, and techniques illustrated below, including the example design and implementation illustrated and described herein, but may be modified within the scope of the appended claims along with their full scope of equivalents.

The terminology and structure employed herein are for describing, teaching, and illuminating some embodiments and their specific features and elements and do not limit, restrict, or reduce the spirit and scope of the claims or their equivalents.

Whether or not a certain feature or element was described as being used once, either way, it may still be referred to as "one or more features", "one or more elements", "at least one feature", or "at least one element."

Unless otherwise defined, all terms, and especially any technical and/or scientific terms, used herein may be taken to have the same meaning as commonly understood by one having ordinary skill in the art.

According to an embodiment of the present disclosure, a UE monitors a target cell's channel condition parameters and decides to release or retain the source cell connection during a DAPS HO. Based on the monitoring, the LTE determines whether channel conditions with respect to the target cell are satisfactory for handoff. To this end, the UE may determine whether a value of each of the monitored channel condition parameters exceeds a respective predefined threshold value. Accordingly, DAPS data bearers (e.g., a link, such as a tunnel for a particular type of traffic) are managed based on a result of the determination. In particular, a DAPS data bearer ("DAPS bearer") associated with the source cell may be managed by determining whether to release or retain it during DAPS HO. Various methodologies for managing a DAPS bearer will be explained in detail in the forthcoming description.

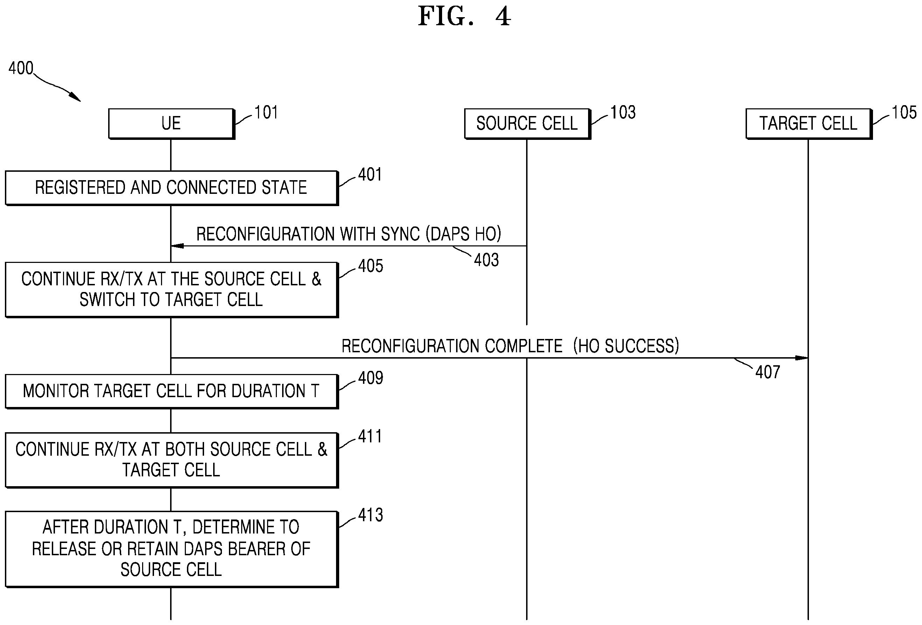

FIG. 4 illustrates a flow chart depicting operations for managing the DAPS bearer in a case where the DAPS release message is missed or delayed at the LTE, according to an embodiment of the present disclosure. According to an embodiment, method 400 illustrates a unique methodology for managing a termination or maintaining of the DAPS bearers for cases in which the DAPS release message is missed or delayed due to various reasons. The various reasons for the delayed or missed messages were explained in detail above. The reference numerals with respect to the related art have been kept the same wherever possible due to ease of explanation.

At operation 401, the UE 101 may be registered and is in a connected state with the source cell 103 of the network. In general, during a registration process, the LTE 101 performs registration with the source cell 103 of the network and transitions to the connected state with the source cell of the network. After the operation 401, the UE 101 receives from the source cell 103, a reconfiguration with DAPS HO message to the target cell 105 at operation 403. Thereafter, at operation 405, the UE 101 continues RX/TX with the source cell 103 and performs handover to establish the connection to the target cell 105. Now, when the DAPS HO and reconfiguration is also completed, the UE 101, at operation 407, sends a radio resource control (RRC) Connection Reconfiguration Complete message to the target cell 105 indicating successful completion of HO. In particular, the UE 101 establishes DAPS data bearers with the target cell 105 during the DAPS handover based on the reception of the DAPS HO message from the source cell 103. At operation 409, the UE 101 may monitor a plurality of channel condition parameters of the target cell 105 upon successful establishment of the DAPS data bearers with the target cell 103. The LTE 101 may monitor the plurality of channel condition parameters for a predefined time duration (T). The monitoring of the channel condition parameters may include monitoring of a Reference Signal Received Power (RSRP), a Reference Signal Received Quality (RSRQ), a Signal to Interference & Noise Ratio (SINR), and/or a Block Error Rate (BLER) of the target cell 105. The monitoring may also include monitoring of the UE's battery state, and a mobility condition of the UE 101. The duration of time (T) may vary based on the monitoring conditions. For example, if the channel conditions with respect to the target cell 105 are very good then the duration of the time (T) for monitoring may be defined to be shorter and if the channel conditions with respect to the target cell 105 is poor then a timer may not be started so as to retain connection with both the cells.

Thereafter, at operation 411, the UE 101 determines whether a value of each of the monitored plurality of channel condition parameters is more than a respective predefined threshold value. For example, if an RSRP threshold is defined as -100dbm, then the DAPS bearer is being managed based on a value of the RSRP threshold. Accordingly, the UE 101 monitors the channel condition parameters with respect to each respective predefined threshold value, and the DAPS data bearers with respect to the source cell 103 are managed based on a result of the determination.

According to an embodiment, it is determined whether the value of each monitored channel condition parameter exceeds its respective predefined threshold value. For example, if the monitored value of the RSRP exceeds the RSRP threshold value, then the UE 101 may determine to either terminate or release the DAPS bearers of the source cell 103.

According to an embodiment, at operation 413, the LTE 101 determines whether to maintain/retain or terminate/release the DAPS bearers of the source cell 103. According to an embodiment, upon an expiry of the predefined time duration (T), the LTE 101 is configured to terminate the DAPS data bearers with the source cell 103 based on a result of (e.g. in response to) the determination that the value of all the monitored plurality of channel condition parameters exceeds the respective predefined threshold value. Otherwise, the UE 101 may maintain, upon expiry of the predefined time duration, the DAPS data bearers with the source cell based on a result of (e.g. in response to) the determination that the value of at least one of the monitored channel condition parameters is less than the respective predefined threshold value. In another example, the UE 101 may terminate a DAPS data bearer(s) associated with the source cell if the value of at least one channel condition parameter exceeds a predefined threshold value for that parameter. For example, if the monitored value of the RSRP is more than the RSRP threshold value, then the UE 101 may determine to terminate the DAPS bearers of the source cell 103. According to this embodiment, the method 400 overcomes problems associated with missed DAPS release messages due to various network or LTE conditions.

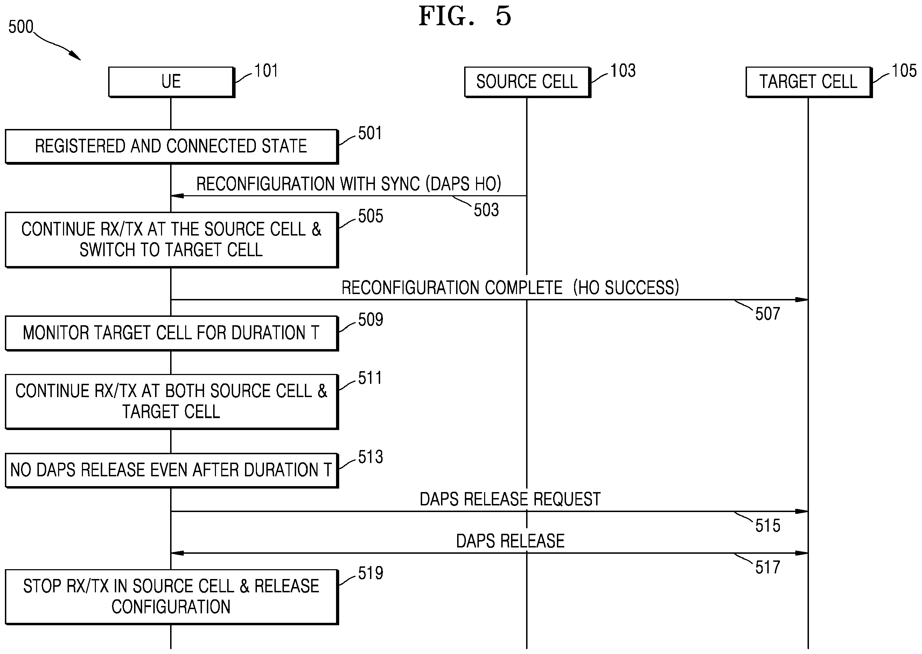

FIG. 5 illustrates a flow chart depicting operations for managing the DAPS bearer after an expiry of the time duration (T), according to an embodiment of the present disclosure. According to an embodiment, the method 500 is an extension to the scenario of FIG. 4 in a case where the DAPS Release is not received from the network even after the duration T. Thus, according to this embodiment, the LTE is configured to indicate the same to the network through UE Assistance information or with a new information element (IE)/new MAC CE so that the DAPS release message can be sent from the network. The method 500 will be explained by referring to FIG. 4 and method 400. Therefore, a detailed explanation of similar steps is omitted here for the sake of brevity.

According to an embodiment, after performing the operations 501 through 511, at operation 513, the LTE 101 determines whether an RRC Connection Reconfiguration (RRCConnectionReconfiguration) message including information associated with a release of the DAPS data bearers of the source cell 103 is not received upon the expiry of the predefined time duration (T). Thus, if it is determined that the RRCConnectionReconfiguration message including information for releasing the DAPS data bearers is not received even after the expiry of the predefined time duration (T), then at operation 515, the UE 101 requests the target cell 105 to release the DAPS data bearers of the source cell 103. The request may be sent as a DAPS release request. According to an embodiment, the UE 101 sends the DAPS release request through any one of the UE assistance information, a new IE, or a new MAC CE, so that the DAPS-release message can be received from the network.

According to an embodiment, upon receiving the DAPS release request, at operation 517, the UE 101 receives the RRCConnectionReconfiguration message from the target cell 105. The received RRCConnectionReconfiguration includes the information related to the release of the DAPS data bearers of the source cell 103. After receiving the information related to the release of the DAPS data bearers of the source cell 103, at operation 519, the LTE 101 is configured to terminate the DAPS data bearers with the source cell 103. In particular, the UE 101 may be configured to stop RX/TX in the source cell 103 and release the configuration.

Operations 501 through 511 may be the same as operations 401 through 411 of the method 400 of FIG. 4. Therefore, for the sake of brevity, a detailed explanation of the same is omitted hereafter.

The information related to the DAPS release message for releasing the DAPS data bearers of the source cell may be received from the target cell 105 through one of a Medium Access Control (MAC) Control Element (CE), a bit in Medium Access Control (MAC) header, or a Downlink Control Information (DCI). Thereafter, the UE 101 may terminate the DAPS data bearers of the source cell based on the received Medium Access Control (MAC) Control Element (CE) or the bit in Medium Access Control (MAC) header, or the Downlink Control Information (DCI). According to this embodiment, instead of using the RRCConnectionReconfiguration message to indicate the DAPS configuration (config) release, the network may also or alternatively utilize the MAC Control Element or DCI or the bit in the MAC header to indicate the same to UE. This may be faster and may avoid processing time compared to the use of the RRC message.

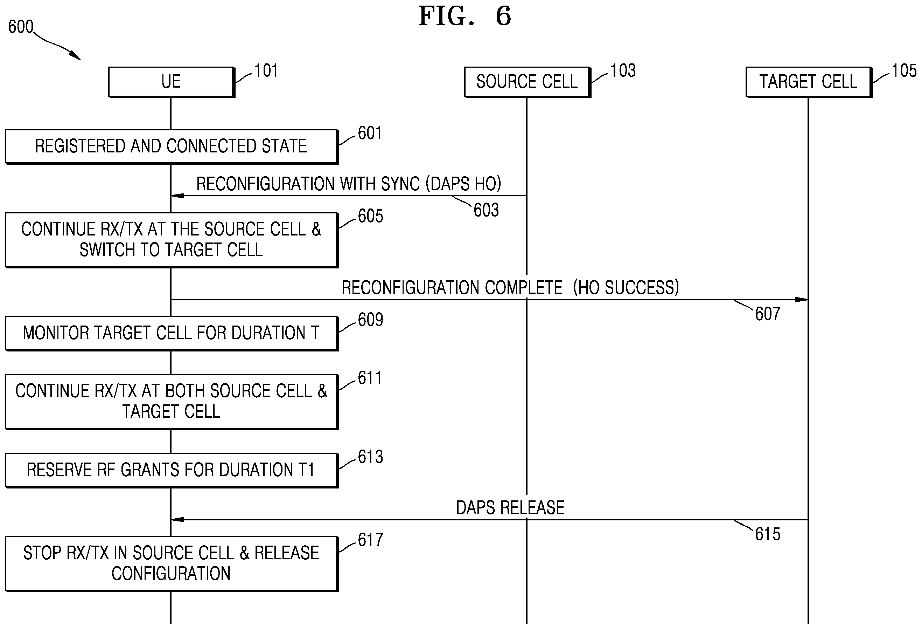

FIG. 6 illustrates a flow chart depicting operations for managing the DAPS bearers for Multi-SIM LTE, according to an embodiment of the present disclosure. According to an embodiment, the method 600 shows an operation flow for managing the DAPS bearers for the Multi-SIM LTE. The method 600 will be explained by referring to the operations of method 400 of FIG. 4. Therefore, a redundant explanation of the same is omitted herein for brevity.

An RF grant may be reserved in the Multi SIM UE for a duration T1 after the DAPS HO completion to ensure reception of the DAPS release indication message from target cell 105. According to this embodiment, T1 is given by equation 1 below:

$$T1 = f \text{ (channel condition of target cell)} + f \text{ (UL/DL BLER of target cell)} + f \text{ (number of SIMs)} \text{ --- (eqn. 1)}$$

After performing the operations 601 through 611, at operation 613, the UE 101 may reserve a radio frequency (RF) grant for a predefined time duration (T1) in Multi SIM Multi Standby (MSMS) user equipment (LTE) 101, for receiving the RRCConnectionReconfiguration message including information for releasing the DAPS data bearers of the source cell during the predefined time duration (T1). As shown in equation 1, the predefined time duration may be a sum of a first function, a second function and a third function. The first function may be a function of the channel condition of the target cell 105. The second function may be a function of the Block Error Rate (BLER) (e.g. the uplink and/or downlink BLER) of the target cell 105. The third function may be a function of the number of SIMs used by the Multi-SIM UE 101. Thereafter, at operation 615, the UE 101 may receive from the target cell 105, the RRCConnectionReconfiguration message including the information to release the DAPS data bearers of the source cell during the predefined time duration (T1) over the reserved RF grants. Accordingly at operation 617, the UE 101 may terminate the DAPS data bearers with the source cell 103 based on the received RRCConnectionReconfiguration message including the information for releasing the DAPS data bearers of the source cell 103.

Operations 601 through 611 may be the same as operations 401 through 411 of the method 400 of FIG. 4. Therefore, a detailed explanation of the same is omitted herein for brevity. Using the method 600, the issues related to the missed DAPS release message due to the DSDS RF grant unavailability in the Multi SIM UEs, may be resolved.

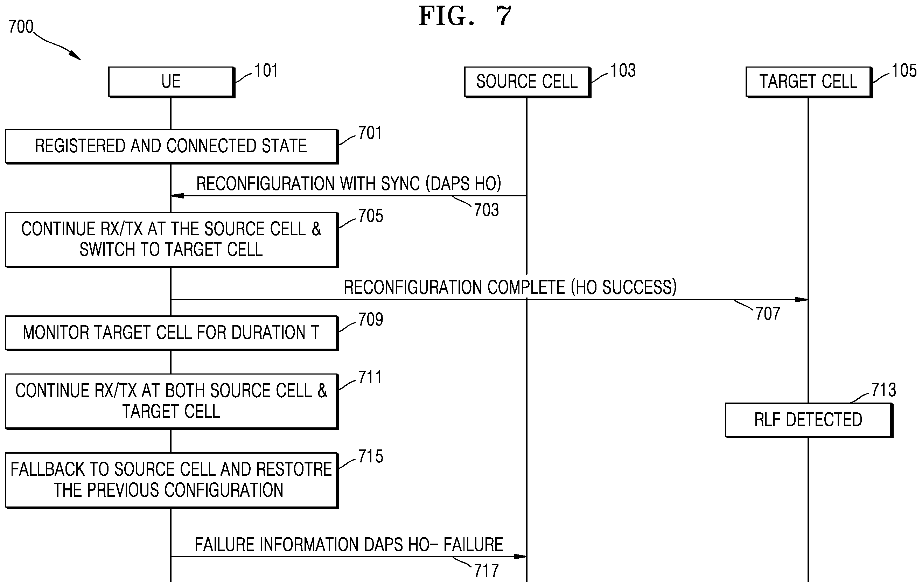

FIG. 7 illustrates a flow chart depicting operations of a method for managing the DAPS bearers in a case where an RLF is detected in the target cell, according to an embodiment of the present disclosure. The method 700 may be applied for managing the DAPS bearers in a case where an RLF is detected in the target cell. The method 700 will be explained by referring to FIG. 4 and method 400. Therefore, a detailed explanation of similar operations is omitted for brevity.

If the RLF is detected in the target cell 105 after the DAPS HO completion and before the DAPS release, the UE 101 may send a failure indication to the source cell 103 with a DAPS HO failure cause. Thus, the LTE 101 may restore the pervious configuration.

After performing the operations 701 through 711, at operation 713, upon the establishment of the DAPS data bearers with the target cell 105, the UE 101 may detect the RLF in the target cell 105 based on the plurality of the channel condition parameters. Thus, after detection of the RLF in the target cell 105, at operation 715, the UE 101 may terminate the DAPS data bearers and the RRC connection with the target cell 105 and maintain the DAPS data bearers and the RRC connection with the source cell 103. The UE 101 may restore the source cell 103 configuration upon maintaining the DAPS data bearers with the source cell 103. Thereafter, at operation 717, the UE 103 may send a DAPS failure message to the source cell 103 based on the restoration of the source cell 103 configuration. Accordingly, the UE 101 may fall back to the source cell 103 again to restore the previous configuration while informing the source cell 103 about the DAPS HO failure.

The operations 701 through 711 may be the same as operations 401 through 411 of the method 400 of FIG. 4. Therefore, a detailed explanation of the same is omitted here for brevity. The method 700 may help in overcoming the issues of missed DAPS release messages due to the RLF detected at the target cell 105 before the DAPS release message is received.

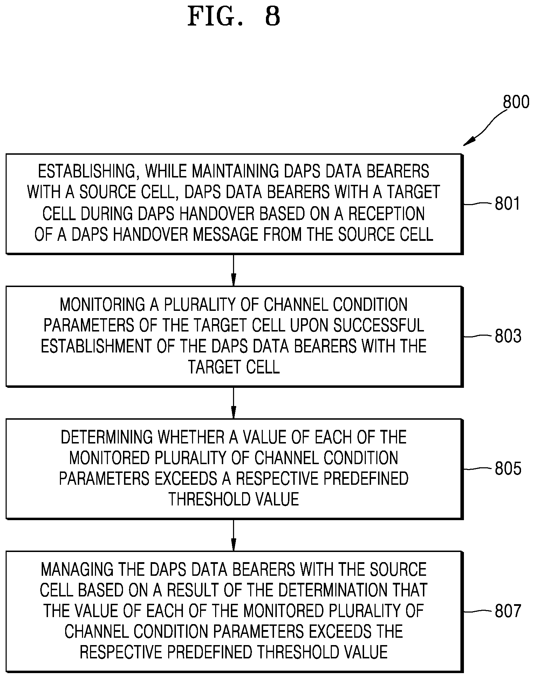

FIG. 8 illustrates a flow chart depicting operations for managing source cell connection during a dual Active Protocol Stack (DAPS) handover, according to an embodiment of the present disclosure. The method 800 is performed by the UE 101. The UE 101 includes one or more processors coupled to memory. The method 800 includes operations explained in detail throughout FIGS. 4 through 7. Therefore, a detailed explanation of the same is omitted hereafter for brevity.

At operation 801, the method 800 includes establishing, while maintaining the DAPS data bearers with the source cell 103, the DAPS data bearers with the target cell 105 during the DAPS handover based on a reception of a DAPS handover message from the source cell 103.

Thereafter, at operation 803, the method 800 includes monitoring the plurality of channel condition parameters of the target cell 105 upon successful establishment of the DAPS data bearers with the target cell 105.

At operation 805, the method 800 includes determining whether a value of each of the monitored plurality of channel condition parameters exceeds a respective predefined threshold value.

At operation 807, the method 800 includes managing the DAPS data bearers with the source cell based on a result of the determination that the value of each of the monitored plurality of channel condition parameters exceeds the respective predefined threshold value (or, in general, when channel conditions with respect to the target cell satisfy at least one predetermined criterion and are thereby satisfactory for handover to the target cell, at least one DAPS data bearer is managed by releasing the same).

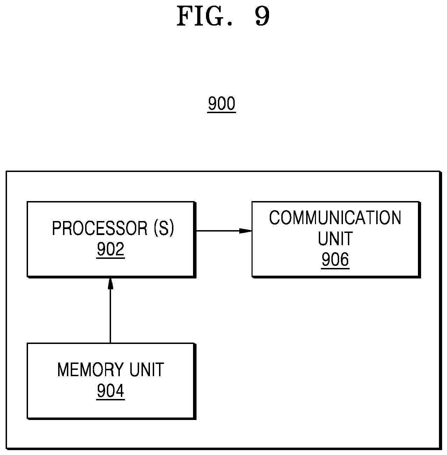

FIG. 9 illustrates an example diagram of a network, according to an embodiment of the present disclosure. The network 900 may correspond to 3GPP release 16 compatible network, as discussed throughout this disclosure. The network 900 may include at least one processor 902, a memory unit 904 (e.g., storage), and a communication unit 906 (e.g., communicator or communication interface). Further, the network 900 may also include the Cloud Random Access Network (C-RAN), a Central Unit (CU), a core Network (NW), a Distributed unit (DU), or the any other possible network (NW) entity. The communication unit 906 may perform one or more functions for transmitting and receiving signals via a wireless channel.

As an example, the processor 902 may be a single processing unit or multiple processing units, all of which could include multiple computing units. The processor 902 may be implemented as one or more microprocessors, microcomputers, microcontrollers, digital signal processors, central processing units, state machines, logic circuitries, and/or any devices that manipulate signals based on operational instructions. Among other capabilities, the processor 902 is configured to fetch and execute computer-readable instructions and data stored in the memory. The processor 902 may include one or a plurality of processors. At this time, one or a plurality of processors 902 may be a general-purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The one or a plurality of processors 1302 may control the processing of the input data in accordance with a predefined operating rule or artificial intelligence (AI) model stored in the non-volatile memory and the volatile memory, i.e., memory unit 904. The predefined operating rule or artificial intelligence model is provided through training or learning.

The memory 904 may include any non-transitory computer-readable medium known in the art including, for example, volatile memory, such as static random access memory (SRAM) and dynamic random access memory (DRAM), and/or non-volatile memory, such as read-only memory (ROM), erasable programmable ROM, flash memories, hard disks, optical disks, and magnetic tapes.

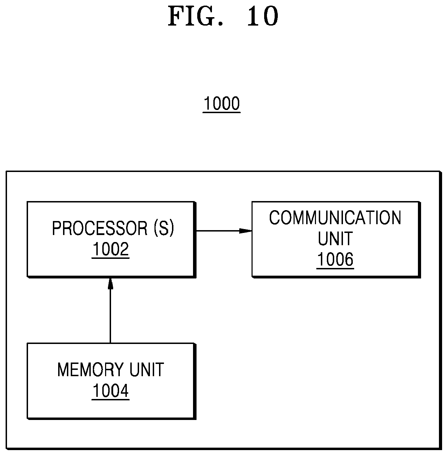

FIG. 10 is a diagram illustrating the configuration of a user equipment (UE), 1000, in a wireless communication system, according to an embodiment of the present disclosure. The configuration of FIG. 10 may be understood as a part of the configuration of the UE 1000. Further, the method of one or more embodiments disclosed herein may be implemented in the UE 1000 according to a further embodiment. Hereinafter, it is understood that terms including "unit" or "module" at the end may refer to the unit for processing at least one function or operation and may be implemented in hardware, software, or a combination of hardware and software.

Referring to FIG. 10, the UE 1000 may include at least one processor 1002, a communication unit 1006 (e.g., communicator or communication interface), and a memory unit 1004 (e.g., storage). By way of example, the UE 1400 may be a User Equipment, such as a cellular phone or other devices that communicate over a plurality of cellular networks (such as a 3G, 4G, a 5G or pre-5G, 6G network or any future wireless communication network). The communication unit 1006 may perform functions for transmitting and receiving signals via a wireless channel.

As an example, the processor 1002 may be a single processing unit or a number of units, all of which could include multiple computing units. The processor 1002 may be implemented as one or more microprocessors, microcomputers, microcontrollers, digital signal processors, central processing units, state machines, logic circuitries, and/or any devices that manipulate signals based on operational instructions. Among other capabilities, the processor 1002 is configured to fetch and execute computer-readable instructions and data stored in the memory. The processor 1002 may include one or a plurality of processors. At this time, one or a plurality of processors 602 may be a general-purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The one or a plurality of processors 1002 may control the processing of the input data in accordance with a predefined operating rule or artificial intelligence (AI) model stored in the non-volatile memory and the volatile memory, i.e., memory unit 1004. The predefined operating rule or artificial intelligence model is provided through training or learning.

The memory 1004 may include any non-transitory computer-readable medium known in the art including, for example, volatile memory, such as static random access memory (SRAM) and dynamic random access memory (DRAM), and/or non-volatile memory, such as read-only memory (ROM), erasable programmable ROM, flash memories, hard disks, optical disks, and magnetic tapes.

Some example embodiments disclosed herein may be implemented using processing circuitry. For example, some example embodiments disclosed herein may be implemented using at least one software program running on at least one hardware device and performing network management functions to control the elements.

While specific language has been used to describe the disclosure, any limitations arising on account of the same are not intended. As would be apparent to a person in the art, various working modifications may be made to the method in order to implement the inventive concept as taught herein.

The drawings and the forgoing description give examples of embodiments. Those skilled in the art will appreciate that one or more of the described elements may well be combined into a single functional element. Alternatively, certain elements may be split into multiple functional elements. Elements from one embodiment may be added to another embodiment. For example, orders of processes described herein may be changed and are not limited to the manner described herein.

Moreover, the actions of any flow diagram need not be implemented in the order shown; nor do all of the acts necessarily need to be performed. Also, those acts that are not dependent on other acts may be performed in parallel with the other acts. The scope of embodiments is by no means limited by these specific examples. Numerous variations, whether explicitly given in the specification or not, such as differences in structure, dimension, and use of material, are possible. The scope of embodiments is at least as broad as given by the following claims.

Benefits, other advantages, and solutions to problems have been described above with regard to specific embodiments. However, the benefits, advantages, solutions to problems, and any component(s) that may cause any benefit, advantage, or solution to occur or become more pronounced are not to be construed as a critical, required, or essential feature or component of any or all the claims.

## Claims

1. A method for managing a source cell connection during a Dual Active Protocol Stack, DAPS, handover with respect to a user equipment, LTE, the method comprising:

   establishing, while maintaining DAPS data bearers with a source cell, DAPS data bearers with a target cell during DAPS handover in response to receiving a DAPS handover message from the source cell;
   monitoring a plurality of channel condition parameters of the target cell upon successful establishment of the DAPS data bearers with the target cell; and
   determining whether a value of each of the monitored plurality of channel condition parameters exceeds a respective predefined threshold value and, if so, managing the DAPS data bearers with the source cell.

2. The method of claim 1, further comprising monitoring the plurality of channel condition parameters for a predefined time duration, and
   wherein the managing of the DAPS data bearers includes terminating, upon expiry of the predefined time duration, the DAPS data bearers with the source cell when the value of each of the monitored plurality of channel condition parameters is determined to exceed the respective predefined threshold value.

3. The method of claim 2, further comprising, when the value of at least one of the monitored plurality of channel condition parameters is determined to be less than the respective predefined threshold value at the expiry of the predefined time duration, maintaining the DAPS data bearers with the source cell.

4. The method of claim 2 or claim 3, further comprising:

   determining whether an RRCConnectionReconfiguration message including information related to releasing the DAPS data bearers of the source cell is not received upon the expiry of the predefined time duration and, if so:

requesting the target cell to release the DAPS data bearers of the source cell; and
receiving, from the target cell based on the request, the

RRCConnectionReconfiguration message, and based thereon terminating the DAPS data bearers with the source cell.

5. The method of any preceding claim, further comprising:
receiving, from the target cell, information related to releasing the DAPS data bearers of the source cell through any one of a Medium Access Control Control Element, a bit in Medium Access Control header, and a Downlink Control Information, and based thereon, terminating the DAPS data bearers of the source cell.

6. The method of any preceding claim, further comprising:

reserving a radio frequency grant for a predefined time duration in Multi SIM Multi Standby UE, for receiving an RRCConnectionReconfiguration message including information for releasing the DAPS data bearers of the source cell during the predefined time duration; and
receiving, from the target cell, the RRCConnectionReconfiguration message and based thereon, terminating the DAPS data bearers with the source cell.

7. The method of any preceding claim, further comprising:

detecting, upon the establishment of the DAPS data bearers with the target cell, a radio link failure, RLF, at the target cell based on the channel condition parameters;
terminating the DAPS data bearers and a radio resource control, RRC, connection with the target cell based on the detection of the RLF; and
maintaining the DAPS data bearers and the RRC connection with the source cell based on the termination of the DAPS data bearers and the RRC connection with the target cell.

8. The method of claim 7, further comprising:

restoring a source cell configuration upon maintaining the DAPS data bearers with the source cell; and
transmitting a DAPS failure message to the source cell following the restoration of the source cell configuration.

9. The method of any preceding claim, wherein the managing of the DAPS data bearers associated with the source cell comprises determining whether to release or retain them.

10. The method of any preceding claim, wherein the establishing, monitoring, determining, and managing are performed by the UE.

11. An apparatus for managing source cell connection during a Dual Active Protocol Stack, DAPS, handover, comprising: one or more processors configured to:

establish, while maintaining DAPS data bearers with a source cell, DAPS data bearers with a target cell during DAPS handover based on a reception of a DAPS handover message from the source cell;
monitor a plurality of channel condition parameters of the target cell upon successful establishment of the DAPS data bearers with the target cell; and
determine whether a value of each of the monitored plurality of channel condition parameters exceeds a respective predefined threshold value and, if so, manage the DAPS data bearers with the source cell.

12. The apparatus of claim 11, wherein the one or more processors is configured to:

monitor the plurality of channel condition parameters for a predefined time duration; and
terminate, upon expiry of the predefined time duration, the DAPS data bearers with the source cell based on a result of the determination that the value of all of the monitored plurality of channel condition parameters is more than the respective predefined threshold value.

13. The apparatus of claim 12, wherein the one or more processors is configured to:
maintain, upon expiry of the predefined time duration, the DAPS data bearers with the source cell based on a result of the determination that the value of at least one of the monitored pluralities of channel condition parameters is less than the respective predefined threshold value.

14. The apparatus of claim 12 or claim 13, wherein the one or more processors is configured to:

determine whether an RRCConnectionReconfiguration message including information related for releasing the DAPS data bearers of the source cell is not received upon the expiry of the predefined time duration;
request the target cell to release the DAPS data bearers of the source cell based on a result of the determination that the RRCConnectionReconfiguration message including the information related for releasing the DAPS data bearers of the source cell is not received upon the expiry of the predefined time duration;
receive, from the target cell, the RRCConnectionReconfiguration message including the information related for releasing the DAPS data bearers of the source cell based on the request; and
terminate the DAPS data bearers with the source cell based on the received RRCConnectionReconfiguration message including the information related for releasing the DAPS data bearers of the source cell.

15. The apparatus of any of claims 11-14, wherein the one or more processors is configured to:

receive, from the target cell, information related for releasing the DAPS data bearers of the source cell through any one of a Medium Access Control Control Element, a bit in Medium Access Control header, and a Downlink Control Information; and
terminate the DAPS data bearers of the source cell based on the received Medium Access Control Control Element or the bit in Medium Access Control header, or the Downlink Control Information.

**Amended claims in accordance with Rule 137(2) EPC.**

1. A method for managing a source cell connection during a Dual Active Protocol Stack, DAPS, handover with respect to a user equipment, UE (101), the method performed by a user equipment and comprising:

establishing (801), while maintaining DAPS data bearers with a source cell (103), DAPS data bearers with a target cell (105) during DAPS handover in response to receiving a DAPS handover message from the source cell (103);
monitoring (803) for a predefined time duration, a plurality of channel condition parameters of the target cell (105) upon successful establishment of the DAPS data bearers with the target cell (105); and
determining whether channel conditions with respect to the target cell (105) are satisfactory for handoff by determining (805) whether a value of each of the monitored plurality of channel condition parameters exceeds a respective predefined threshold value and, if so, managing (807) the DAPS data bearers with the source cell (103), wherein the managing (807) of the DAPS data bearers includes terminating, upon expiry of the predefined time duration, the DAPS data bearers with the source cell (103) when the value of each of the monitored plurality of channel condition parameters is determined to exceed the respective predefined threshold value; and
when the value of at least one of the monitored plurality of channel condition parameters is determined to be less than the respective predefined threshold value at the expiry of the predefined time duration, maintaining the DAPS data bearers with the source cell (103).

2. The method of claim 1, further comprising:
determining whether an RRCConnectionReconfiguration message including information related to releasing the DAPS data bearers of the source cell (103) is not received upon the expiry of the predefined time duration and, if so:

requesting the target cell (105) to release the DAPS data bearers of the source cell (103); and
receiving, from the target cell (105) based on the request, the RRCConnectionReconfiguration message, and based thereon terminating the DAPS data bearers with the source cell (103).

3. The method of claim 1 or claim 2, further comprising:
receiving, from the target cell (105), information related to releasing the DAPS data bearers of the source cell (103) through any one of a Medium Access Control Control Element, a bit in Medium Access Control header, and a Downlink Control Information, and based thereon, terminating the DAPS data bearers of the source cell (103).

4. The method of any preceding claim, further comprising:

reserving a radio frequency grant for a predefined time duration in Multi SIM Multi Standby UE, for receiving an RRCConnectionReconfiguration message including information for releasing the DAPS data bearers of the source cell (103) during the predefined time duration; and
receiving, from the target cell (105), the RRCConnectionReconfiguration message and based thereon, terminating the DAPS data bearers with the source cell (103).

5. The method of any preceding claim, further comprising:

detecting, upon the establishment of the DAPS data bearers with the target cell (105), a radio link failure, RLF, at the target cell (105) based on the channel condition parameters;
terminating the DAPS data bearers and a radio resource control, RRC, connection with the target cell (105) based on the detection of the RLF; and
maintaining the DAPS data bearers and the RRC connection with the source cell (103) based on the termination of the DAPS data bearers and the RRC connection with the target cell (105).

6. The method of claim 5, further comprising:

restoring a source cell configuration upon maintaining the DAPS data bearers with the source cell (103); and transmitting a DAPS failure message to the source cell (103) following the restoration of the source cell configuration.

7. The method of any preceding claim, wherein the managing (807) of the DAPS data bearers associated with the source cell (103) comprises determining whether to release or retain them.

8. The method of any preceding claim, wherein the plurality of channel condition parameters includes at least one of a Reference Signal Received Power (RSRP) value, a Reference Signal Received Quality (RSRQ) value, a Signal to Interference & Noise Ratio (SINR) value, or a Block Error Rate (BLER) value.

9. An apparatus for managing source cell connection during a Dual Active Protocol Stack, DAPS, handover with respect to a user equipment, comprising:
one or more processors (1002) configured to:

establish, while maintaining DAPS data bearers with a source cell (103), DAPS data bearers with a target cell (105) during DAPS handover based on a reception of a DAPS handover message from the source cell (103);
monitor (803) for a predefined time duration, a plurality of channel condition parameters of the target cell (105) upon successful establishment of the DAPS data bearers with the target cell (105); and
determine whether channel conditions with respect to the target cell (105) are satisfactory for handoff by determining (805)whether a value of each of the monitored plurality of channel condition parameters exceeds a respective predefined threshold value and, if so, manage the DAPS data bearers with the source cell (103), wherein the one or more processors (1002) is configured to:
manage the DAPS bearers by terminating, upon expiry of the predefined time duration, the DAPS data bearers with the source cell (103) based on a result of the determination that the value of all of the monitored plurality of channel condition parameters is more than the respective predefined threshold value; and
maintain, upon expiry of the predefined time duration, the DAPS data bearers with the source cell (103) based on a result of the determination that the value of at least one of the monitored pluralities of channel condition parameters is less than the respective predefined threshold value.

10. The apparatus of claim 9, wherein the one or more processors (1002) is configured to:

determine whether an RRCConnectionReconfiguration message including information related for releasing the DAPS data bearers of the source cell (103) is not received upon the expiry of the predefined time duration;
request the target cell (105) to release the DAPS data bearers of the source cell (103) based on a result of the determination that the RRCConnectionReconfiguration message including the information related for releasing the DAPS data bearers of the source cell (103) is not received upon the expiry of the predefined time duration;
receive, from the target cell (105), the RRCConnectionReconfiguration message including the information related for releasing the DAPS data bearers of the source cell (103) based on the request; and
terminate the DAPS data bearers with the source cell (103) based on the received RRCConnectionReconfiguration message including the information related for releasing the DAPS data bearers of the source cell (103).

**11.** The apparatus of claim 9 or claim 10, wherein the one or more processors (1002) is configured to:

receive, from the target cell (105), information related for releasing the DAPS data bearers of the source cell (103) through any one of a Medium Access Control Control Element, a bit in Medium Access Control header, and a Downlink Control Information; and

terminate the DAPS data bearers of the source cell (103) based on the received Medium Access Control Control Element or the bit in Medium Access Control header, or the Downlink Control Information.

**12.** The apparatus of any one of claim 9 to 11, wherein the one or more processors is configured to:

reserve a radio frequency grant for a predefined time duration in Multi SIM Multi Standby UE, for receiving an RRCConnectionReconfiguration message including information for releasing the DAPS data bearers of the source cell(103) during the predefined time duration;

receive, from the target cell (105), the RRCConnectionReconfiguration message including the information to release the DAPS data bearers of the source cell (103) during the predefined time duration over the reserved radio frequency grant; and

terminate the DAPS data bearers with the source cell (103) based on the received RRCConnectionReconfiguration message including the information for releasing the DAPS data bearers of the source cell (103).

**13.** The apparatus of any one of claims 9 to 12, wherein the one or more processors is configured to:

detect, upon the establishment of the DAPS data bearers with the target cell (105), a radio link failure, RLF at the target cell (105) based on the channel condition parameters;

terminate the DAPS data bearers and an RRC connection with the target cell (105) based on the detection of the RLF; and

maintain the DAPS data bearers and the RRC connection with the source cell (103) based on the termination of the DAPS data bearers and the RRC connection with the target cell (105).

**14.** The apparatus of claim 13, wherein the one or more processors is configured to:

restore a source cell configuration upon maintaining the DAPS data bearers with the source cell (103); and transmit a DAPS failure message to the source cell (103) based on the restoration of the source cell configuration.

**15.** The apparatus of any one of claims 9 to 14, wherein the plurality of channel condition parameters includes at least one of a Reference Signal Received Power (RSRP) value, a Reference Signal Received Quality (RSRQ) value, a Signal to Interference & Noise Ratio (SINR) value, or a Block Error Rate (BLER) value.

# FIG. 1 (RELATED ART)

UE 101

SOURCE CELL 103

TARGET CELL 105

REGISTERED AND CONNECTED STATE 107

RECONFIGURATION WITH SYNC (DAPS HO) 109

CONTINUE RX/TX AT THE SOURCE CELL & SWITCH TO TARGET CELL 111

RECONFIGURATION COMPLETE (HO SUCCESS) 113

CONTINUE RX/TX AT BOTH SOURCE CELL & TO TARGET CELL 115

RECONFIGURATION ( DAPS-RELEASE) (delayed) 117

STOP RX/TX IN SOURCE CELL & RELEASE CONFIGURATION 119

EP 4 486 008 A1

# FIG. 2 (RELATED ART)

UE — 101  SOURCE CELL — 103  TARGET CELL — 105

REGISTERED AND CONNECTED STATE — 107

RECONFIGURATION WITH SYNC (DAPS HO) — 109

CONTINUE RX/TX AT THE SOURCE CELL & SWITCH TO TARGET CELL — 111

RECONFIGURATION COMPLETE (HO SUCCESS) — 113

CONTINUE RX/TX AT BOTH SOURCE CELL & TO TARGET CELL — 115

NW ISSUE, NOT SENT RECONFIGURATION (DAPS- RELEASE ) — 201

EP 4 486 008 A1

# FIG. 3 (RELATED ART)

UE ─101

SOURCE CELL ─103

TARGET CELL ─105

REGISTERED AND CONNECTED STATE ─107

RECONFIGURATION WITH SYNC (DAPS HO) ─109

CONTINUE RX/TX AT THE SOURCE CELL & SWITCH TO TARGET CELL ─111

RECONFIGURATION COMPLETE (HO SUCCESS) ─113

RLF DETECTED ─301

CONTINUE RX/TX AT BOTH SOURCE CELL & TO TARGET CELL ─115

STOP RX/TX IN SOURCE CELL & RELEASE CONFIGURATION ─119

REESTABLISHMENT ─303

CELL SEARCH, DL/UL SYNCHRONIZATION, CONNECTION ESTABLISHMENT ─305

EP 4 486 008 A1

# FIG. 4

400

UE ⎯ 101    SOURCE CELL ⎯ 103    TARGET CELL ⎯ 105

REGISTERED AND CONNECTED STATE ⎯ 401

RECONFIGURATION WITH SYNC (DAPS HO) ⎯ 403

CONTINUE RX/TX AT THE SOURCE CELL & SWITCH TO TARGET CELL ⎯ 405

RECONFIGURATION COMPLETE (HO SUCCESS) ⎯ 407

MONITOR TARGET CELL FOR DURATION T ⎯ 409

CONTINUE RX/TX AT BOTH SOURCE CELL & TARGET CELL ⎯ 411

AFTER DURATION T, DETERMINE TO RELEASE OR RETAIN DAPS BEARER OF SOURCE CELL ⎯ 413

EP 4 486 008 A1

# FIG. 5

500

UE — 101  SOURCE CELL — 103  TARGET CELL — 105

REGISTERED AND CONNECTED STATE — 501

RECONFIGURATION WITH SYNC (DAPS HO) — 503

CONTINUE RX/TX AT THE SOURCE CELL & SWITCH TO TARGET CELL — 505

RECONFIGURATION COMPLETE (HO SUCCESS) — 507

MONITOR TARGET CELL FOR DURATION T — 509

CONTINUE RX/TX AT BOTH SOURCE CELL & TARGET CELL — 511

NO DAPS RELEASE EVEN AFTER DURATION T — 513

DAPS RELEASE REQUEST — 515

DAPS RELEASE — 517

STOP RX/TX IN SOURCE CELL & RELEASE CONFIGURATION — 519

EP 4 486 008 A1

# FIG. 6

600

UE ⌐101        SOURCE CELL ⌐103        TARGET CELL ⌐105

REGISTERED AND CONNECTED STATE ⌐601

RECONFIGURATION WITH SYNC (DAPS HO)
603

CONTINUE RX/TX AT THE SOURCE CELL &
SWITCH TO TARGET CELL ⌐605

RECONFIGURATION COMPLETE (HO SUCCESS)
607

MONITOR TARGET CELL FOR DURATION T ⌐609

CONTINUE RX/TX AT BOTH SOURCE CELL &
TARGET CELL ⌐611

RESERVE RF GRANTS FOR DURATION T1 ⌐613

DAPS RELEASE
615

STOP RX/TX IN SOURCE CELL & RELEASE
CONFIGURATION ⌐617

# FIG. 7

EP 4 486 008 A1

# FIG. 8

800

| |
|---|
| ESTABLISHING, WHILE MAINTAINING DAPS DATA BEARERS WITH A SOURCE CELL, DAPS DATA BEARERS WITH A TARGET CELL DURING DAPS HANDOVER BASED ON A RECEPTION OF A DAPS HANDOVER MESSAGE FROM THE SOURCE CELL |

801

| |
|---|
| MONITORING A PLURALITY OF CHANNEL CONDITION PARAMETERS OF THE TARGET CELL UPON SUCCESSFUL ESTABLISHMENT OF THE DAPS DATA BEARERS WITH THE TARGET CELL |

803

| |
|---|
| DETERMINING WHETHER A VALUE OF EACH OF THE MONITORED PLURALITY OF CHANNEL CONDITION PARAMETERS EXCEEDS A RESPECTIVE PREDEFINED THRESHOLD VALUE |

805

| |
|---|
| MANAGING THE DAPS DATA BEARERS WITH THE SOURCE CELL BASED ON A RESULT OF THE DETERMINATION THAT THE VALUE OF EACH OF THE MONITORED PLURALITY OF CHANNEL CONDITION PARAMETERS EXCEEDS THE RESPECTIVE PREDEFINED THRESHOLD VALUE |

807

# FIG. 9

900

# FIG. 10

1000

```
┌─────────────────────────────────────────────────────┐
│                                                      │
│   ┌──────────────────┐      ┌──────────────────┐     │
│   │  PROCESSOR (S)   │─────▶│  COMMUNICATION   │     │
│   │      1002        │      │      UNIT        │     │
│   │                  │      │      1006        │     │
│   └──────────────────┘      └──────────────────┘     │
│            ▲                                          │
│            │                                          │
│   ┌──────────────────┐                               │
│   │   MEMORY UNIT    │                               │
│   │      1004        │                               │
│   └──────────────────┘                               │
│                                                      │
└─────────────────────────────────────────────────────┘
```

Europäisches
Patentamt
European
Patent Office
Office européen
des brevets

# EUROPEAN SEARCH REPORT

**Application Number**

EP 23 20 7155

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/083550 A1 (DATANG MOBILE COMMUNICATIONS EQUIPMENT CO LTD [CN]) 28 April 2022 (2022-04-28) * the whole document * | 1-15 | INV. H04W36/18 |
| X,P | & EP 4 236 454 A1 (DATANG MOBILE COMMUNICATIONS EQUIPMENT CO LTD [CN]) 30 August 2023 (2023-08-30) * abstract * * paragraph [0084] - paragraph [0128] * * figures 9-12 * | 1-15 | ADD. H04W36/00 |
| X | WO 2021/091450 A1 (ERICSSON TELEFON AB L M [SE]) 14 May 2021 (2021-05-14) * abstract * * page 15, line 20 - page 18, line 27 * * figure 8 * | 1-15 | |
| X | VIVO: "Discussion on the RLF and HOF for DAPS", 3GPP DRAFT; R2-1909775 DISCUSSION ON THE RLF AND HOF FOR DAPS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czech Republic; 20190826 - 20190830 16 August 2019 (2019-08-16), pages 1-8, XP051767570, Retrieved from the Internet: URL:http://www.3gpp.org/ftp/tsg_ran/WG2_RL 2/TSGR2_107/Docs/R2-1909775.zip [retrieved on 2019-08-16] * the whole document * | 1-15 | TECHNICAL FIELDS SEARCHED (IPC) H04W |

-/--

The present search report has been drawn up for all claims

| Place of search | Date of completion of the search | Examiner |
|---|---|---|
| Munich | 22 March 2024 | Hodgins, Will |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**page 1 of 2**

Europäisches
Patentamt

European
Patent Office

Office européen
des brevets

# EUROPEAN SEARCH REPORT

Application Number

EP 23 20 7155

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VIVO: "Summary of Email Discussion on CP for DAPS", 3GPP DRAFT; R2-1912349 SUMMARY OF EMAIL DISCUSSION ON CP FOR DAPS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN , vol. RAN WG2, no. Chongqing, China; 20191014 - 20191018 4 October 2019 (2019-10-04), XP051804428, Retrieved from the Internet: URL:https://ftp.3gpp.org/tsg_ran/WG2_RL2/TSGR2_107bis/Docs/R2-1912349.zip R2-1912349 Summary of Email Discussion on CP for DAPS.docx [retrieved on 2019-10-04] * the whole document * | 1-15 | |

----- 

TECHNICAL FIELDS
SEARCHED       (IPC)

The present search report has been drawn up for all claims

| Place of search | Date of completion of the search | Examiner |
|---|---|---|
| Munich | 22 March 2024 | Hodgins, Will |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

# EP 4 486 008 A1

## ANNEX TO THE EUROPEAN SEARCH REPORT
## ON EUROPEAN PATENT APPLICATION NO.

EP 23 20 7155

This annex lists the patent family members relating to the patent documents cited in the above-mentioned European search report.
The members are as contained in the European Patent Office EDP file on
The European Patent Office is in no way liable for these particulars which are merely given for the purpose of information.

22-03-2024

| Patent document cited in search report | | Publication date | Patent family member(s) | | Publication date |
|---|---|---|---|---|---|
| WO 2022083550 | A1 | 28-04-2022 | CN | 114390638 A | 22-04-2022 |
| | | | EP | 4236454 A1 | 30-08-2023 |
| | | | US | 2023388873 A1 | 30-11-2023 |
| | | | WO | 2022083550 A1 | 28-04-2022 |
| WO 2021091450 | A1 | 14-05-2021 | AR | 120418 A1 | 09-02-2022 |
| | | | WO | 2021091450 A1 | 14-05-2021 |

EPO FORM P0459

For more details about this annex : see Official Journal of the European Patent Office, No. 12/82

25